## Europäisches Patentamt
## European Patent Office
## Office européen des brevets

(19)

(11) Veröffentlichungsnummer : **0 097 623**
**B1**

(12)

# EUROPÄISCHE PATENTSCHRIFT

(45) Veröffentlichungstag der Patentschrift :
25.03.87

(51) Int. Cl.⁴ : **B 62 H   1/12**

(21) Anmeldenummer : 83810279.6

(22) Anmeldetag : 22.06.83

(54) Einrichtung zum Betätigen einer Stützvorrichtung für ein Einspurfahrzeug.

(30) Priorität : 23.06.82 CH 3831/82

(43) Veröffentlichungstag der Anmeldung :
04.01.84 Patentblatt 84/01

(45) Bekanntmachung des Hinweises auf die Patenterteilung : 25.03.87 Patentblatt 87/13

(84) Benannte Vertragsstaaten :
DE FR GB IT

(56) Entgegenhaltungen :
AT-B-   148 491
FR-A- 2 399 354
FR-A- 2 467 133
Die Akte enthält technische Angaben, die nach dem Eingang der Anmeldung eingereicht wurden und die nicht in dieser Patentschrift enthalten sind.

(73) Patentinhaber : **Peraves AG für Flug- und Fahrzeugentwicklungen**
**Oberfeldstrasse 53**
**CH-8408 Winterthur (CH)**

(72) Erfinder : **Wagner, Arnold**
**Oberfeldstrasse 44 A**
**CH-8408 Winterthur (CH)**

Jouve, 18, rue St-Denis, 75001 Paris, France

## Beschreibung

Die Erfindung betrifft eine Einrichtung zum Betätigen einer Stützvorrichtung für ein Einspurfahrzeug entsprechend dem Oberbegriff des Patentanspruchs 1.

Einspurfahrzeuge wie Motorräder sind bekanntlich über einer gewissen Fahrtgeschwindigkeit stabil, müssen jedoch nach Unterschreiten einer Minimalfahrgeschwindigkeit, z. B. mit den Füssen des Fahrers oder einer Stützvorrichtung, etwa über Kufen oder Stützräder, abgestützt werden, um ein Kippen und Umfallen des Fahrzeuges zu vermeiden. Einspurfahrzeuge mit Kabinen und Karosserien mit Wetterschutz erlauben zufolge der Karosseriewände ein Fussabstützen nur, wenn Löcher oder Klappen in der Kabinenwand das Herausstrecken der Füsse ermöglichen und-/oder das Gewicht des Fahrzeuges nicht so hoch ist, dass die Fussabstützung kräftemässig unmöglich wird. Trifft dies nicht zu, müssen Kufen oder Stützräder verwendet werden. Da derartige Stützvorrichtungen die Kurvenschräglage begrenzen, müssen sie für die Schnellfahrt im dynamisch stabilen Fahrtbereich hochgezogen werden.

Bei einem bekannten Einspurfahrzeug sind zwei seitliche Stützräder über eine Betätigungseinrichtung der im Oberbegriff des Patentanspruchs 1 genannten Art selbsttätig zwischen einer wirkungslosen angehobenen Stellung und einer abgesenkten Stützstellung verstellbar (FR-A1-2 399 354). Dabei sollen die Stützräder jeweils durch ein Steuersignal eines Fahrtmessers beim Unterschreiten der vorgegebenen minimalen Fahrgeschwindigkeit abgesenkt und beim Ueberschreiten dieser Geschwindigkeit angehoben werden. Durch die abgesenkten Stützräder der bekannten Stützvorrichtung wird das Einspurfahrzeug jeweils senkrecht zur Fahrbahn eingestellt. Bei seitlich geneigter Fahrbahn, z. B. in einer Kurve, liegt daher der Schwerpunkt nicht lotrecht über der Linie, welche die Auflagepunkte der beiden im Einspurbetrieb verwendeten Räder verbindet. Entsprechend ist eines der beiden Stützräder jeweils durch eine grössere Stützkraft belastet als das andere Stützrad. Wenn das Einspurfahrzeug in diesem Zustand die das selbsttätige Anheben der Stützräder auslösende Fahrgeschwindigkeit überschreitet, wird diese Stützkraft frei und das Fahrzeug kann — unterhalb einer Fahrgeschwindigkeit, die dem Fahrzeug dynamische Stabilität verleiht — zur Seite kippen.

Es hat sich gezeigt, dass ein in diesem Sinne vorzeitiges Anheben der Stützräder bereits bei relativ geringen seitlichen Neigungen der Fahrbahn zum Ausbrechen und Umkippen des Einspurfahrzeuges führen kann.

Der Erfindung liegt die Aufgabe zugrunde, eine, insbesondere in dieser Hinsicht verbesserte Betätigungseinrichtung für die Stützvorrichtung zu schaffen, welche sowohl beim Uebergang vom Langsamfahrzustand mit abgesenkter Stützvorrichtung zum Schnellfahrzustand mit hochgezogener Stützvorrichtung als auch beim Uebergang von Schnellfahrt zu Langsamfahrt eine entsprechend rechtzeitige Betätigung der Stützvorrichtung gewährleistet.

Diese Aufgabe wird durch die im kennzeichnenden Teil des Patentanspruchs 1 angegebene Erfindung gelöst.

Der erfindungsgemäss vorgesehene Querbeschleunigungsmesser misst die auf das Fahrzeug wirkende Querbeschleunigung. Falls diese einen vorbestimmten, vorzugsweise einstellbaren Wert überschreitet, bleibt die abgesenkte Stützvorrichtung in abgesenkter Stellung blockiert oder wird die angehobene Stützvorrichtung — beim Unterschreiten einer vorbestimmten, vom Fahrtmesser erfassten Fahrtgeschwindigkeit — sofort abgesenkt.

Durch die erfindungsgemässe Ausführung ist einerseits gewährleistet, dass beim Abfahren und beim Uebergang vom statisch instabilen in den dynamisch stabilen Einspurfahrbereich die Stützvorrichtung im richtigen Moment, d. h. erst dann angehoben wird, wenn die Fahrtgeschwindigkeit genügend gross ist und die auf das Fahrzeug wirkende Querbeschleunigung den vorbestimmten Wert unterschreitet. Auf diese Weise wird ein Ausbrechen oder ein seitlicher Schwenker des Einspurfahrzeuges verhindert. Andererseits wird beim Abbremsen und Uebergang von Schnellfahrt in Langsamfahrt ein vorzeitiges Absenken der Stützvorrichtung bei Fahrgeschwindigkeiten verhindert, welche einen vorbestimmten, vorzugsweise z. B. auf die Strassenverhältnisse einstellbaren Wert übersteigen. Dies ist besonders wichtig, weil die zu früh abgesenkte Stützvorrichtung beim Durchfahren einer nachfolgenden Kurve die Schräglage des Fahrzeuges blockieren und damit ein Ueberschlagen verursachen kann. Durch die erfindungsgemäss ausgebildete Betätigungseinrichtung wird sichergestellt, dass nach dem Unterschreiten der minimalen Fahrgeschwindigkeit für dynamisch stabile Einspurfahrt die Stützvorrichtung abgesenkt wird, sobald sich durch Neigung des Fahrzeuges oder andere Ursachen, wie dem Kurvenradius nicht angepasste Geschwindigkeit/Seitenneigungskombination, eine Querbeschleunigung aufzubauen beginnt. Auch in diesem Fall wird somit ein Umkippen des Fahrzeuges oder ein Ausbrechen vermieden.

In den abhängigen Patentansprüchen sind weitere Ausgestaltungen der Erfindung hervorgehoben.

Die Erfindung wird anhand zweier in der Zeichnung schematisch dargestellter Ausführungsbeispiele erläutert. Es zeigen:

Figur 1 eine erfindungsgemässe Betätigungseinrichtung einer Stützvorrichtung für ein Einspurfahrzeug, und

Figur 2 eine entsprechende Betätigungseinrichtung in einer abgewandelten Ausführungsform.

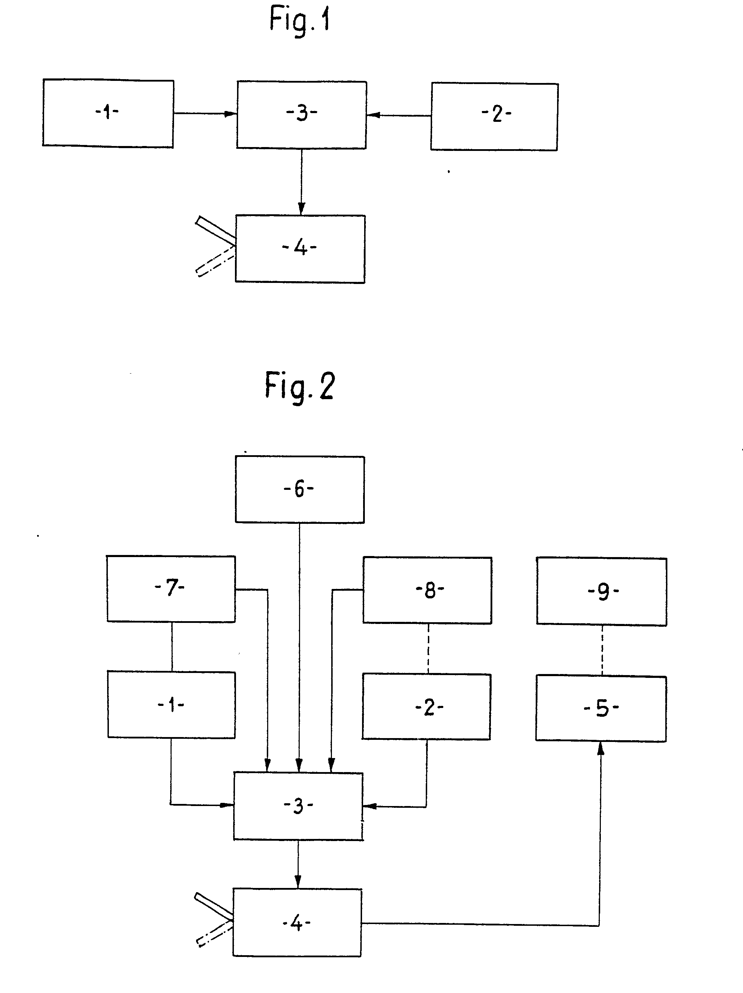

Die Einrichtung nach Fig. 1 enthält einen Querbeschleunigungsmesser 1, einen die Geschwindigkeit des nicht dargestellten Fahrzeuges erfassenden Fahrtmesser 2 und ein Steuergerät 3 sowie einen Verstellmechanismus 4 einer nicht dargestellten Stützvorrichtung des Einspurfahrzeuges. Der Verstellmechanismus 4, der als elektrische, pneumatische oder hydraulische Servoeinrichtung ausgebildet sein kann, ist über das Steuergerät 3 betätigbar. Dieses ist in Abhängigkeit von Steuersignalen des Fahrtmessers 2 und des Querbeschleunigungsmessers 1 beeinflussbar. Dabei bewirkt ein vorbestimmter Wert des Steuersignals des Fahrtmessers 2 die Auslösung eines Betätigungssignals des Steuergerätes 3, das eine Betätigung des Verstellmechanismus 4 im Sinne eines selbsttätigen Absenkens bzw. Anhebens der Stützvorrichtung ermöglicht. Ein vorbestimmter Wert des Steuersignals des Querbeschleunigungsmessers 1 bewirkt hingegen eine Blockierung der Uebertragung des zum Anheben der Stützvorrichtung bestimmten Betätigungssignals des Steuergerätes 3 bzw. die Freigabe der Uebertragung des zum Absenken der Stützvorrichtung bestimmten Betätigungssignals des Steuergerätes 3.

Die Einrichtung nach Fig. 2 enthält ein mit dem Verstellmechanismus 4 verbundenes Anzeigegerät 5 für die jeweilige Betriebsstellung der Stützvorrichtung, welches eine Ueberwachung der Steuerung durch den Fahrer ermöglicht. Gemäss Fig. 2 können der Querbeschleunigungsmesser 1 und der Fahrtmesser 2 je mit einer Einrichtung 7 bzw. 8 zum Einstellen eines Sollwerts des entsprechenden Steuersignals verbunden sein. Damit kann die Steuerung wechselnden Gegebenheiten wie Strassenzustand, z. B. Schneeglätte, Naturstrassenoberfläche usw. angepasst werden bzw. für die Wünsche des Fahrers eingestellt werden.

Wie aus der Fig. 2 weiter hervorgeht, kann das Steuergerät 3 auch an eine manuelle Ueberteuereinrichtung angeschlossen sein, welche von den Steuersignalen des Querbeschleunigungsmessers 1 und des Fahrtmessers 2 unabhängige Betätigung des Verstellmechanismus 4 gestattet. Die dargestellte Betätigungseinrichtung enthält ferner ein Warngerät 9, welches mit dem Anzeigegerät 5 gekoppelt sein kann und welches dem Fahrer ein Nichtfunktionieren oder einen Ausfall der Steuerung anzeigen kann. In diesem sowie anderen Sonderfällen kann der Fahrer durch Betätigen der Ueberteuerungseinrichtung 6 ein Kippen des Fahrzeuges oder ein Fehlschalten der Stützvorrichtung vermeiden, so dass das Fahrzeug auch in Sonderfällen und aussergewöhnlichen Fahrsituationen beherrschbar ist.

### Patentansprüche

1. Einrichtung zum Betätigen einer Stützvorrichtung für ein Einspurfahrzeug, mit einem Verstellmechanismus (4) zum wahlweisen Absenken und Anheben von Stützelementen, welcher Verstellmechanismus (4) über ein Steuergerät (3) betätigbar ist, das in Abhängigkeit von einem, durch einen die Geschwindigkeit des Fahrzeuges erfassenden Fahrtmesser (2) erzeugten, ersten Steuersignal beeinflussbar ist, wobei jeweils ein vorbestimmter Wert dieses ersten Steuersignals die Auslösung eines entsprechenden Betätigungssignals des Steuergerätes (3) bewirkt, das eine Betätigung des Verstellmechanismus (4) im Sinne eines selbsttätigen Absenkens bzw. Anhebens der Stützelemente ermöglicht, dadurch gekennzeichnet, dass das Steuergerät (3) in Abhängigkeit von einem durch einen Querbeschleunigungsmesser (1) erzeugten, zweiten Steuersignal beeinflussbar ist, wobei ein vorbestimmter Wert des zweiten Steuersignals eine Blockierung der Uebertragung des zum Anheben der Stützelemente bestimmten Betätigungssignals des Steuergerät (3) bzw. die Freigabe der Uebertragung des zum Absenken der Stützelemente bestimmten Betätigungssignals des Steuergeräts (3) bewirkt.

2. Einrichtung nach Anspruch 1, dadurch gekennzeichnet, dass der Verstellmechanismus (4) mit einem Anzeigegerät (5) für die jeweilige Betriebsstellung der Stützelemente sowie gegebenenfalls mit einem bei Nichtfunktionieren oder einem Ausfall des Steuergeräts (3) entsprechenden Warngerät (9) verbunden ist.

3. Einrichtung nach Anspruch 1 oder 2, mit einer Einrichtung (7) zum Einstellen eines in das Steuergerät (3) einzugebenden Sollwerts des ersten Steuersignals und mit einer an das Steuergerät (3) angeschlossenen, vom ersten Steuersignal unabhängig betätigbaren manuellen Ueberteuereinrichtung zum Betätigen des Verstellmechanismus, dadurch gekennzeichnet, dass eine dem Querbeschleunigungsmesser (1) zugeordnete zweite Einrichtung (8) zum Einstellen eines Sollwerts des in das Steuergerät (3) einzugebenen zweiten Steuersignals vorgesehen ist, wobei die manuelle Ueberteuereinrichtung (6) auch vom zweiten Steuersignal (1) unabhängig betätigbar ist.

### Claims

1. A control system for a supporting device for a single-track vehicle, the system comprising an adjusting mechanism (4) for selectively lowering and raising support elements and controllable by way of a control device (3) controllable in dependence upon a first control signal produced by a movement meter (2) detecting vehicle speed, a predetermined value of the first control signal triggering a corresponding control signal of the control device (3), the latter signal initiating actuation of the adjusting mechanism (4) in the sense of an automatic lowering or raising of the support elements, characterised in that the control device (3) is controllable in dependence upon a second control signal produced by a transverse acceleration meter (1), a predetermined value of the second control signal producing a blocking of the transmission of the « raise » signal of the control device (3) and the release of the transmission of the « lower » signal of the control device (3).

2. A system according to claim 1, characterised in that the adjusting mechanism (4) is connected to an indicator (5) showing the operative position of the support elements ans possibly to an alarm or warning device (9) operative to show non-functioning or a failure of the control device (3).

3. A system according to claim 1 or 2 having provision (7) for setting up a set value of the first control signal, such set value being enterable into the control device (3), and having a manual override arrangement which is connected to the control device (3) and which is operable independently of the first control signal and which is operative to actuate the adjusting mechanism, characterised in that a second arrangement (8) which is associated with the transverse acceleration meter (1) is provided for setting up a set value of the second control signal to be introduced into the control device (3), the manual override arrangement (6) also being operable independently of the second control signal (1).

**Revendications**

1. Système pour commander un dispositif de support d'un véhicule monotrace, comportant un mécanisme de réglage (4) pour abaisser et relever sélectivement des éléments de soutien, ce mécanisme de réglage (4) pouvant être actionné par l'intermédiaire d'un appareil de commande (3) qui est sous la dépendance d'un premier signal de commande engendré par un capteur de vitesse (2) détectant la vitesse du véhicule, une valeur prédéterminée de ce premier signal de commande provoquant à chaque fois le déclenchement d'un signal d'actionnement correspondant de l'appareil de commande (3), qui permet une manœuvre du mécanisme de réglage (4) respectivement dans le sens d'un abaissement ou d'un relèvement automatique des éléments de soutien, caractérisé par le fait que l'appareil de commande (3) est sous la dépendance d'un second signal de commande engendré par un capteur d'accélération transversale (1), une valeur prédéterminée du second signal de commande provoquant un blocage de la transmission du signal d'actionnement de l'appareil de commande (3) destiné à relever les éléments de soutien ou, respectivement, la libération de la transmission du signal d'actionnement de l'appareil de commande (3) destiné à abaisser les éléments de soutien.

2. Système selon la revendication 1, caractérisé par le fait que le mécanisme de réglage (4) est raccordé à un appareil (5) d'affichage de la position d'utilisation considérée des éléments de soutien, ainsi que, éventuellement, à un appareil d'alarme (9) réagissant en cas de non-fonctionnement ou d'une défaillance de l'appareil de commande (3).

3. Système selon la revendication 1 ou 2, présentant un dispositif (7) pour ajuster une valeur de consigne du premier signal de commande devant être introduite dans l'appareil de commande (3), ainsi qu'un dispositif de commande manuelle absolue destiné à actionner le mécanisme de réglage, raccordé à l'appareil de commande (3) et pouvant être manœuvré indépendamment du premier signal de commande, caractérisé par le fait qu'il est prévu un second dispositif (8) associé au capteur d'accélération transversale (1) et destiné à ajuster une valeur de consigne du second signal de commande devant être introduit dans l'appareil de commande (3), le dispositif (6) de commande manuelle absolue pouvant également être manœuvré indépendamment du second signal de commande (1).

Fig.1

Fig.2